# EUROPEAN PATENT APPLICATION

(11) **EP 2 042 299 A2**
(43) Date of publication of application: **01.04.2009**
(21) Application number: 08016998.0
(22) Date of filing: 26.09.2008
(51) Int. Cl.: B32B 25/00, F15B 1/10

(54) **Diaphragm and accumulator using the same**

(30) Priority: 28.09.2007 JP 2007255755; 28.09.2007 JP 2007255759
(71) Applicant: TOKAI RUBBER INDUSTRIES, LTD., Komaki-shi, Aichi-ken, 485-8550 (JP)
(72) Inventor: Tohyama, Toyohisa, Komaki-shi Aichi-ken 485-8550 (JP); Taguchi, Takehiko, Komaki-shi Aichi-ken 485-8550 (JP); Nagaoka, Hiroaki, Komaki-shi Aichi-ken 485-8550 (JP); Mihara, Yasuhiko, Komaki-shi Aichi-ken 485-8550 (JP)
(74) Representative: Kuhnen & Wacker

(57) **Abstract**

A diaphragm comprising:
a resin layer for gas shielding;
a rubber layer adapted to be adjacent to a gas chamber, and
a rubber layer adapted to be adjacent to an oil chamber, the rubber layers being formed on opposite sides of the resin layer; wherein
the rubber layer adapted to be adjacent to the gas chamber is formed of a rubber composition containing a component (A) mentioned below and the rubber layer adapted to be adjacent to the oil chamber is formed of a rubber composition containing a component (B) mentioned below:
(A) a hydrogenated acrylonitrile butadiene rubber in which an amount of a bound acrylonitrile is less than 20%, and
(B) a hydrogenated acrylonitrile butadiene rubber in which an amount of a bound acrylonitrile is set within a range from 20 to 28%.

## Description

### Technical Field

The present invention relates to a diaphragm and an accumulator containing the same which is used, for example, in hydraulic systems (hydraulic suspensions, hydraulic automatic clutches, power steering and the like) of vehicles including automobile vehicles and industrial vehicles.

### Background Art

A hydraulic accumulator using the characteristic of expanding and compressing volume by charge pressure of gas is used for hydraulic systems (for example, hydraulic suspensions, hydraulic automatic clutches, power steering and the like) of automobile vehicles and the like. This accumulator has a pressure accumulating function and generally comprises a metallic shell and a diaphragm installed within the shell for partitioning the internal space of the shell into two chambers (a gas chamber and an oil chamber). The accumulator contains a gas such as nitrogen sealed in the gas chamber. The oil chamber is connected with a hydraulic circuit of the hydraulic system via a circulation hole which is used during operation.
When pressure in the oil chamber of the accumulator becomes higher than that of the gas chamber as a result of hydraulic oil flowing into the oil chamber via the circulation hole, the diaphragm is bent and elastically deformed so that the gas within the gas chamber is compressed and the volume of the gas chamber becomes smaller and, on the other hand, the oil chamber is enlarged and pressure is accumulated in the hydraulic oil.

A rubber diaphragm has been used for the above accumulator in terms of volumetric efficiency, weight and cost. In recent years, to prevent gas infiltration and leakage via the above rubber diaphragm, diaphragms consisting of composites of resin and rubber have been mass produced which are provided with, for example, a resin layer for gas shielding including polyamide resin, ethylene-vinyl alcohol copolymer (EVOH) and the like, a rubber layer adapted to be adjacent to a gas chamber via this resin layer, and a rubber layer adapted to be adjacent to an oil chamber via the above resin layer. Rubber materials for forming both the above rubber layers are selected with respect to the kind of oil used in the hydraulic circuit, for example, when mineral oil is used, in view of the oil resistance to mineral oil, rubber materials such as an acrylonitrile butadiene rubber (NBR), a hydrogenated acrylonitrile butadiene rubber (H-NBR), an epichlorohydrin rubber and the like are used (see, for example, JP-A-2001-254701).

### First Problem

However, a conventional diaphragm has a problem that a rubber layer adapted to be adjacent to a gas chamber does not have enough permanent deformation during low-temperature compression. Thus the rubber of a rubber layer adapted to be adjacent to a gas chamber becomes worn, resulting in gas leaking from a caulking spot and weakening a gas-tight property. A conventional diaphragm has a problem that a rubber layer adapted to be adjacent to an oil chamber has poor oil resistance (resistance to oil permeability and swelling property). As a result, a plasticizing agent is extracted by a hydraulic oil such as the above mineral oil, rubber property of a rubber layer adapted to be adjacent to an oil chamber tends to deteriorate. Furthermore, when resistance to oil of a rubber layer adapted to be adjacent to an oil chamber is poor, hydraulic oil tends to permeate into a resin layer and resistance to gas permeability deteriorates.

Under these circumstances, the present invention has been made. That is, an object of the present invention is to provide a diaphragm having excellent gas-tight properties, oil resistance and gas permeability resistance, and further to provide an accumulator using the same.

### Second Problem

In a conventional diaphragm, adhesion of the resin layer and a rubber layer adapted to be adjacent to a gas chamber, and adhesion of the resin layer and a rubber layer adapted to be adjacent to an oil chamber is usually performed by using chlorinated polyolefins adhesives and the like, respectively. A large amount of co-cross-linking agents are combined in order to strengthen adhesion of each rubber layers and resin layer. Therefore, the adhesion layer is hardened by heat during vulcanizing or a similar process. Moreover, there is a problem that the adhesion layer may crack as a result of bending of the diaphragm at the point of use, which spreads into the resin layer and the durability of the product deteriorates.

### Summary of the Invention

Under these circumstances, the present invention has been made. That is, an object of the present invention to provide a diaphragm which suppresses crack formation in a resin layer and also has superior durability, and further to provide an accumulator using the same.

### First Invention

To accomplish the above object, a first gist of the present invention is to provide a diaphragm comprising: a resin layer for gas shielding; a rubber layer adapted to be adjacent to a gas chamber, and a rubber layer adapted to be adjacent to an oil chamber, the rubber layers being formed on opposite sides of the resin layer; wherein the rubber layer adapted to be adjacent to the gas chamber is formed of a rubber composition containing a component (A) mentioned below and the rubber layer adapted to be adjacent to the oil chamber is formed of a rubber composition containing a component (B) mentioned below:
(A) a hydrogenated acrylonitrile butadiene rubber in which an amount of a bound acrylonitrile is less than 20%, and
(B) a hydrogenated acrylonitrile butadiene rubber in which an amount of a bound acrylonitrile is set within a range from 20 to 28%.

A second gist of the present invention is to provide an accumulator comprising: a shell; and a diaphragm which separates an internal space of the shell into a gas chamber and an oil chamber.

That is, the present inventors reached the conclusion that a rubber layer adjacent to the gas chamber is formed of a rubber composition mainly comprising a hydrogenated acrylonitrile butadiene rubber (H-NBR) and conducted numerous experiments with respect to the amount of bound acrylonitrile (AN amount) of H-NBR used in a rubber layer adapted to be adjacent to a gas chamber and a rubber layer adapted to be adjacent to an oil chamber. A tendency to fatigue at a low temperature should be prevented because a rubber layer adapted to be adjacent to a gas chamber is caulked. Therefore it is necessary to set a low AN amount of H-NBR for the rubber layer adapted to be adjacent to a gas chamber. By contrast, if an AN amount of H-NBR forming a rubber layer adapted to be adjacent to an oil chamber is low, a rubber adapted to be adjacent to an oil chamber will swell and a plasticizing agent in the rubber will melted into an oil. As a result, a rubber layer adapted to be adjacent to an oil chamber will deteriorate and the rubber property deteriorates. Furthermore, a resin layer and gas permeability deteriorate because of penetration of hydraulic oil. Therefore, it is necessary to prevent melting of a plasticizing agent to an oil by setting a high AN amount of H-NBR forming a rubber layer adapted to be adjacent to an oil chamber and to suppress a deterioration of gas permeability. However, when an AN amount H-NBR forming a rubber layer adapted to be adjacent to an oil chamber is too high, a rubber layer adapted to be adjacent to an oil chamber tends to be fatigued, thus it is necessary to consider the prevention of a plasticizing agent melting to an oil and the balance between suppression of deterioration of gas permeability by penetration of an oil to a resin layer and the prevention of fatigue. The inventors of the present invention did further experiments because of these reasons and found that when a rubber layer adapted to be adjacent to a gas chamber is formed of a rubber composition comprising H-NBR in which an AN amount is less than 20% and a rubber layer adapted to be adjacent to an oil chamber is formed of rubber composition comprising H-NBR in which an AN amount is within a range from 20 to 28%, diaphragm having good operability of suppression of a deterioration of charged pressure, a deterioration of gas permeability and having superior durability can be obtained, thus, the inventors attained the present invention.

### Second Invention

To accomplish the above object, a third gist of the present invention is to provide a diaphragm comprising: a resin layer for gas shielding; a rubber layer adapted to be adjacent to a gas chamber, and a rubber layer adapted to be adjacent to an oil chamber, the rubber layers being formed on opposite sides of the resin layer; wherein the resin layer and the rubber layer adapted to be adjacent to a gas chamber, the resin layer and the rubber layer adapted to be adjacent to an oil chamber are respectively bonded using a chlorinated polybutadiene rubber adhesive.

A fourth gist of the present invention is to provide an accumulator comprising: a shell; and a diaphragm which separates an internal space of the shell into a gas chamber and an oil chamber.

That is, the present inventors have intensively studied so as to obtain diaphragm suppressing a crack formation of a resin layer and having superior durability. First, chlorinated polyolefins adhesive and the like used conventionally could not suppress a crack formation sufficiently regardless of the number of experiments which reduced the amount of the co-cross-linking agent, its adhesive property was not enough. Therefore, the inventors focused on adhesive rubber agent (elastomer series) having an excellent flexibility and continued experimentation. The inventors found that a chlorinated polybutadiene rubber adhesive can suppress crack formation in resin layer and has superior durability, thus the present invention has been completed.

### First Invention

Therefore, a diaphragm of the present invention has a rubber layer adapted to be adjacent to a gas chamber being formed of rubber compositions comprising H-NBR in which an AN amount is less than 20% and a rubber layer adapted to be adjacent to an oil chamber being formed of rubber compositions comprising H-NBR in which an AN amount is within a range from 20 to 28%. That is, the present invention forms a rubber layer adapted to be adjacent to a gas chamber comprising H-NBR in which an AN amount is less than the conventional one, less than 20%, and can improve its permanent deformation during low-temperature compression, suppress gas leaking from a caulking spot of a rubber layer adapted to be adjacent to a gas chamber and improve its gas-tight property. Also, the present invention forms a rubber layer adapted to be adjacent to an oil chamber comprising H-NBR in which an AN amount is higher than the conventional one, within a range from 20% to 28%, and can improve a resistance to oil permeability, suppress a deterioration of a resin layer and this makes it possible to suppress a deterioration of gas permeability.

Furthermore, if an AN amount of H-NBR used for the rubber compositions of the rubber layer adapted to be adjacent to a gas chamber is set within a range from 17 to 19%, a gas-tight property is more improved.

### Second Invention

As mentioned above, the resin layer and the rubber layer adapted to be adjacent to a gas chamber, the resin layer and the rubber layer adapted to be adjacent to an oil chamber are respectively bonded using a chlorinated polybutadiene rubber adhesive in a diaphragm of the present invention. This chlorinated polybutadiene rubber adhesive has better flexibility and resistance to liquid than a conventional chlorinated polyolefins adhesive and the like. Thus crack formation in an adhesion itself seldom occurs. Therefore, a crack is less likely to be led to a resin layer and this makes product durability superior.

### Brief Description of the Drawings

Fig. 1 is a view (partial sectional view) for illustrating one example of the accumulator of the present invention.
Fig. 2 is an enlarged sectional view of the essential portion for illustrating one example of the diaphragm of the present invention.
Fig. 3 is a schematic view for illustrating a system (accumulator) using the diaphragm of the present invention.

### Detailed Description

Embodiments of the present invention will be described in detail below.

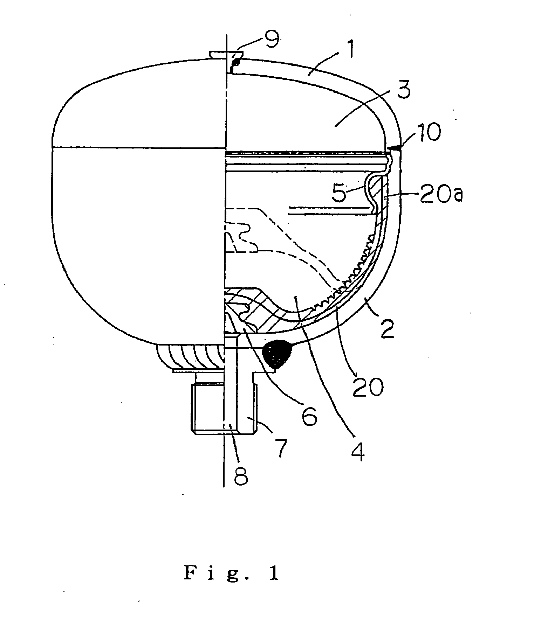

Fig. 1 is a view illustrating one example of an accumulator according to a diaphragm of the present invention. The accumulator comprises a pair of split-shells 1, 2 and a diaphragm 20 for separating an internal space of the split-shells 1, 2 into a gas chamber 3 and an oil chamber 4. In Fig. 1, 5 is a ring holder, 6 is a poppet, 7 is a plug having an oil port 8, 9 is a gas plug, 10 is a portion of the split-shells welded by an electron beam. In Fig. 1, the dashed line illustrates the position of the diaphragm when elastically deformed.

The material of the split-shells 1, 2 is, for example, preferably formed by iron, aluminum alloy and the like.

The diaphragm 20 comprises three layers, a resin layer 21 for gas shielding and a rubber layer 22 adjacent to the gas chamber and a rubber layer 23 adjacent to the oil chamber, wherein the rubber layers 22, 23 are integrally unified to opposite sides of the resin layer 21.

### First Invention

In the first invention, the rubber layer 22 adapted to be adjacent to the gas chamber is formed of a rubber composition containing a component (A) mentioned below and the rubber layer 23 adapted to be adjacent to the oil chamber is formed of a rubber composition containing a component (B) mentioned below and this is the most important property:
(A) a hydrogenated acrylonitrile butadiene rubber in which an amount of a bound acrylonitrile is less than 20%, and
(B) a hydrogenated acrylonitrile butadiene rubber in which an amount of a bound acrylonitrile is set within a range from 20 to 28%.

The rubber layer 22 adapted to be adjacent to the gas chamber is formed of a rubber composition comprising specific H-NBR (component A). In this specific H-NBR (component A), an AN amount is less than 20%, preferably within 17% to 19%. This means that if an AN amount is not less than 20%, permanent deformation during low-temperature compression is not enough and a rubber of the rubber layer 22 adapted to be adjacent to the gas chamber becomes fatigued, then gas leaking occurs from a caulking spot and a gas-tight property deteriorates.

Also, the content of the specific H-NBR (component A) in the rubber composition forming the rubber layer 22 adapted to be adjacent to a gas chamber is preferably less than 50% by weight, and more preferably less than 45% by weight, based on the whole rubber composition (solid content).

For the rubber composition forming the rubber layer 22 adapted to be adjacent to a gas chamber, carbon black, a vulcanizing agent, an antioxidant, a plasticizing agent, a co-cross-linking agent, zinc oxide, magnesium oxide, stearate and the like may appropriately be added to as well as the specific H-NBR (component A). They may be used alone or in combinations thereof.

Next, the rubber layer 23 adapted to be adjacent to an oil chamber is formed of a rubber composition comprising the specific H-NBR (component B). In this specific H-NBR (component B), an AN amount is within 20% to 28%, preferably within 22% to 26%. This means that if an AN amount is less than 20%, resistance to oil of a resin layer 23 adapted to be adjacent to an oil chamber deteriorates and a plasticizing agent and the like of a rubber is extracted by hydraulic oil, then a rubber property of the rubber layer 23 adapted to be adjacent to an oil chamber is deteriorated. Furthermore hydraulic oil permeates into a resin layer and gas peremeability resistance deteriorates. By contrast, if an AN amount is more than 28%, the rubber layer 23 adapted to be adjacent to an oil chamber tends to be fatigued.

The content of the specific H-NBR (component B) in the rubber composition forming the rubber layer 23 adapted to be adjacent to an oil chamber is preferably not more than 50% by weight, and more preferably not more than 45% by weight based on the whole rubber composition (solid content).

For the rubber composition forming the rubber layer 23 adapted to be adjacent to an oil chamber, carbon black, a vulcanizing agent, an antioxidant, a plasticizing agent, a co-cross-linking agent, zinc oxide, magnesium oxide, stearate and the like may appropriately be added to as well as the specific H-NBR (component B). They may be used alone or in combinations thereof.

The resin layer 21 prevents gas sealed within the gas chamber 3 from permeating through the diaphragm. The material for the resin layer 21 is not critical as long as its gas permeability is low. Examples of such a material include ethylene-vinyl alcohol copolymer (EVOH), polyamide resin, polyvinylidene fluoride, polyvinylidene chloride, polyphenylene sulfide, liquid crystal polymer and polyethylene naphthalate. These materials may be used alone or in combinations thereof. The resin layer 21 may have a single-layer structure or a multi-layer structure of two or more layers.

As for the above EVOH, there is no specific limitation. However, it is preferable to employ an EVOH material wherein ethylene is present in an amount of 20 to 65% by weight and wherein the remainder is vinyl alcohol. Among these, the EVOH material wherein ethylene is present in an amount of 32% by weight is preferably suitable.

Examples of the above polyamide resin include nylon 6, nylon 66, nylon 6-10 and nylon 6-12. These resins are used alone or in combinations thereof. If such polyamide resin contains nylon 6 or nylon 66 as a base, its melting point becomes near to that of the EVOH. Therefore, it is possible to employ various mixtures of nylon 6 or nylon 66 and another polyamide resin. Especially, it is preferable to employ a mixture of the above polyamide resin and a polyolefin resin. Since a polyolefin resin has poor water absorbability in such a mixture, it prevents water absorption by the EVOH. That is, if the EVOH absorbs water, its gas barrier property deteriorates, which can be prevented by the inclusion of a polyolefine resin.

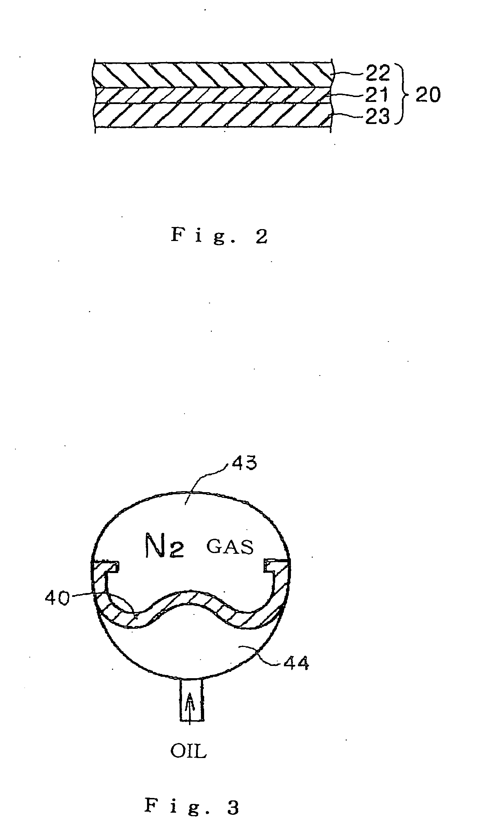

The diaphragm 20 of the present invention may be produced, for example, in the following manner. That is, the resin layer (or a resin film) 21 for gas shielding is produced by using a resin film having low gas permeability such as EVOH or polyamide resin, or laminating two or more thereof. Secondly, an elastomer adhesive (for example, chlorinated polybutadiene rubber adhesive) is applied on both sides of the resin layer (or the resin film) 21 and the material for forming the rubber layer 22 adjacent to the gas chamber and the material for forming the rubber layer 23 adjacent to the oil chamber are press-formed by a presser and cured so as to be adhered to the resin layer. Thus, the diaphragm 20 having a three layered structure as shown in Fig. 2 is obtained.

The resin layer (resin film) 21 of the thus obtained diaphragm 20 of the present invention is usually 50 to 210 µm in thickness. And the thickness of the rubber layer 22 adjacent to the gas chamber and the rubber layer 23 adjacent to the oil chamber is usually from 1 to 4 mm, and preferably from 1 to 1.5 mm, respectively.

The accumulator of the present invention may be produced using the thus obtained diaphragm 20, for example, in the following manner. First, a peripheral edge of the diaphragm 20 is positioned at an edge of an inner circumference of the opening of the lower split-shell 2, one of a pair of split-shells 1, 2, each shaped into a generally hemispherical shape, and fixed by being pinched between a periphery of the ring holder 5 and the edge of the inner circumference of the opening of the lower split-shell 2 so as to be installed on the lower split-shell 2 according to Fig. 1. Next, the opening of an upper split-shell 1, the other of a pair of split-shells, is engaged onto the opening of the lower split-shell 2 and welded by electron beam or the like. Thus, the accumulator shown in Fig. 1 can be produced.

The shape of the shell in the accumulator of the present invention is not limited to a generally spherical shell formed by engaging the pair of split-shells 1, 2, each having a generally hemispherical shape in Fig. 1, and includes a conchoidal, a cylinder, a box and the like.

### Second Invention

Next, the second invention will hereinafter be described. In the second invention, the resin layer 21 and the rubber layer 22 adapted to be adjacent to a gas chamber, the resin layer 21 and the rubber layer 23 adapted to be adjacent to an oil chamber are respectively bonded using a chlorinated polybutadiene rubber adhesive and this is the most important property.

For the rubber components of chlorinated polybutadiene rubber adhesive, chlorinated polybutadiene rubber is used for a main component, but the invention is not limited to this.

Also, it is possible to add appropriately an additive agent except rubber components such as chlorinated polybutadiene rubber and the like to the chlorinated polybutadiene rubber adhesive. For this additive agent, for example, titanium dioxide, dichlorohydrin, carbon black and the like is available. They may be used alone or in combinations thereof.

Next, for the rubber layer 22 adapted to be adjacent to a gas chamber, for example, a rubber composition comprising rubber components such as acrylonitrile butadiene rubber (NBR), hydrogenated acrylonitrile butadiene rubber (H-NBR), butyl rubber (IIR), halogenated butyl rubber (Cl-IIR, Br-IIR), epichlorohydrin rubber, ethylene propylene rubber (EPM, EPDM) and the like is used. These rubbers are used alone or in combinations thereof.

For the rubber composition forming the rubber layer 22 adapted to be adjacent to a gas chamber, carbon black, a vulcanizing agent, an antioxidant, a plasticizing agent, zinc oxide, stearate and the like may appropriately be added to as well as rubber components such as the specific H-NBR. These additives are used alone or in combinations thereof.

For the rubber layer 23 adapted to be adjacent to an oil chamber, for example, a rubber composition comprising rubber components such as acrylonitrile butadiene rubber (NBR), hydrogenated acrylonitrile butadiene rubber (H-NBR), butyl rubber (IIR), halogenated butyl rubber (Cl-IIR, Br-IIR), epichlorohydrin rubber, ethylene propylene rubber (EPM, EPDM) and the like is used. These rubbers are used alone or in combinations thereof.

For the rubber composition forming the rubber layer 23 adapted to be adjacent to an oil chamber, carbon black, a vulcanizing agent, an antioxidant, a plasticizing agent, zinc oxide, stearate and the like may appropriately be added to as well as rubber components such as the specific H-NBR. These additives are used alone or in combinations thereof.

The resin layer 21 prevents gas sealed within the gas chamber 3 from permeating through the diaphragm. The material for the resin layer 21 is not critical as long as its gas permeability is low. Examples of such a material include ethylene-vinyl alcohol copolymer (EVOH), polyamide resin, polyvinylidene fluoride, polyvinylidene chloride, polyphenylene sulfide, liquid crystal polymer and polyethylene naphthalate. These materials may be used alone or in combinations thereof. The resin layer 21 may have a single-layer structure or a multi-layer structure of two or more layers.

As for the above EVOH, there is no specific limitation. However, it is preferable to employ an EVOH material wherein ethylene is present in an amount of 20 to 65% by weight and wherein the reminder is vinyl alcohol. Among these, the EVOH material wherein ethylene is present in an amount of 32% by weight is preferably suitable.

Examples of the above polyamide resin include nylon 6, nylon 66, nylon 6-10 and nylon 6-12. These resins are used alone or in combinations thereof. If such polyamide resin contains nylon 6 or nylon 66 as a base, its melting point becomes near to that of the EVOH. Therefore, it is possible to employ various mixtures of nylon 6 or nylon 66 and another polyamide resin. Especially, it is preferable to employ a mixture of the above polyamide resin and a polyolefin resin. Since a polyolefin resin has poor water absorbability in such a mixture, it prevents water absorption by the EVOH. That is, if the EVOH absorbs water, its gas barrier property deteriorates, which can be prevented by the inclusion of a polyolefine resin.

The diaphragm 20 of the present invention may be produced, for example, in the following manner. That is, the resin layer (or a resin film) 21 for gas shielding is produced by using a resin film having low gas permeability such as EVOH or polyamide resin, or laminating two or more thereof. Secondly, a chlorinated polybutadiene rubber adhesive is applied on both sides of the resin layer (or the resin film) 21 and the material for forming the rubber layer 22 adjacent to the gas chamber and the material for forming the rubber layer 23 adjacent to the oil chamber are press-formed by a presser and cured so as to be adhered to the resin layer. Thus, the diaphragm 20 having a three layered structure as shown in Fig. 2 is obtained.

For example, dipping, spraying, brush painting and the like may be applied to a way of applying chlorinated polybutadiene rubber adhesive.

The resin layer (resin film) 21 of thus obtained diaphragm 20 of the present invention is usually 50 to 210 µm in thickness. And the thickness of the rubber layer 22 adjacent to the gas chamber and the rubber layer 23 adjacent to the oil chamber is usually 1 to 4 mm, preferably 1 to 1.5 mm, respectively. The thickness of the adhesion layer (now shown) comprising the chlorinated polybutadiene rubber adhesion is preferably within 2 to 30 µm, and more preferably within 5 to 10 µm.

The accumulator of the present invention may be produced using the thus obtained diaphragm 20, for example, in the following manner. First, a peripheral edge of the diaphragm 20 is positioned at an edge of an inner circumference of the opening of the lower split-shell 2, one of a pair of split-shells 1, 2, each shaped into a generally hemispherical shape, and fixed by being pinched between a periphery of the ring holder 5 and the edge of the inner circumference of the opening of the lower split-shell 2 so as to be installed on the lower split-shell 2 according to Fig. 1. Next, the opening of an upper split-shell 1, the other of a pair of split-shells, is engaged onto the opening of the lower split-shell 2 and welded by electron beam or the like. Thus, the accumulator shown in Fig. 1 can be produced.

The shape of the shell in the accumulator of the present invention is not limited to a generally spherical shell formed by engaging the pair of split-shells 1, 2, each having a generally hemispherical shape in Fig. 1, and includes a conchoidal, a cylinder, a box and the like.

### Examples

Examples will be described below along with comparative Examples. However, the present invention is not limited to these Examples.

First, prior to preparation of the Examples and Comparative Examples, rubber compositions were prepared.

### Preparation of rubber compositions 1 to 6

The components shown in the following Table 1 were mixed together in ratios shown in the same Table and then kneaded using a roller to prepare rubber compositions.

**Table 1**

| (Parts by weight) | | | | | | | |
|---|---|---|---|---|---|---|---|
| | | Rubber composition | | | | | |
| | | 1 | 2 | 3 | 4 | 5 | 6 |
| H-NBR (1): AN amount 36% | | - | - | 10 | 10 | 20 | 50 |
| H-NBR (2): AN amount 25% | | - | - | - | 90 | 80 | 50 |
| H-NBR (3): AN amount 19% | | - | - | 90 | - | - | - |
| H-NBR (4): AN amount 19% | | - | 100 | - | - | - | - |
| H-NBR (5): AN amount 17% | | 100 | - | - | - | - | - |
| Stearic acid | | 1 | 1 | 1 | 1 | 1 | 1 |
| Zinc oxide | | 5 | 5 | 5 | 5 | 5 | 5 |
| Magnesium oxide | | 5 | 5 | 5 | 5 | 5 | 5 |
| Antioxidant (1) | | 1 | 1 | 1 | 1 | 1 | 1 |
| Antioxidant (2) | | 1 | 1 | 1 | 1 | 1 | 1 |
| Carbon black | | 70 | 70 | 70 | 60 | 60 | 60 |
| Plasticizing agent | | 28 | 28 | 28 | 18 | 18 | 18 |
| Vulcanizing agent (1) | | 12 | 12 | 6 | 6 | 6 | 6 |
| Co-cross-linking agent | | 7.5 | 7.5 | 7.5 | 7.5 | 7.5 | 7.5 |
| Vulcanizing agent (2) | | 0.1 | 0.1 | 0.1 | 0.1 | 0.1 | 0.1 |
| Total AN amount (%) Polymer fraction | | 17 43 | 19 43 | 20 45 | 26 49 | 28 49 | 30 49 |
| Initial physical properties | TS (MPa) | 11.0 | 13.2 | 10.3 | 17.0 | 17.2 | 18.5 |
| | EB (%) | 240 | 272 | 300 | 372 | 367 | 377 |
| | Hs (JIS A) | 55 | 57 | 57 | 61 | 62 | 64 |
| 100°C x 70 hours | ΔTS (%) | -9.1 | -0.8 | 16.2 | -0.4 | 4.3 | 0.7 |
| | ΔEB (%) | -8.3 | -4.4 | -10.7 | 4.3 | 2.5 | -4.5 |
| | ΔV (%) | 12.0 | 9.9 | 2.3 | -0.2 | -0.4 | 0.4 |
| | ΔW (%) | 8.0 | 4.9 | 0.2 | -1.1 | -1.1 | -0.6 |
| 120°C x 70 hours | ΔTS (%) | -13.6 | 0.0 | 15.5 | 1.4 | 3.5 | 2.6 |
| | ΔEB (%) | -16.7 | -11.8 | -2.7 | -7.5 | -3.0 | -3.4 |
| | ΔV (%) | 12.0 | 10.2 | 1.5 | 0.5 | 0.8 | -0.2 |
| | ΔW (%) | 9.0 | 5.7 | -0.4 | -0.5 | -0.8 | -1.0 |
| 150°C x 70 hours | ΔTS (%) | -18.2 | -3.8 | 12.3 | 4.9 | 4.1 | 2.3 |
| | ΔEB (%) | -16.7 | -8.8 | -17.3 | 2.2 | -5.2 | - 11.9 |
| | ΔV (%) | 12.0 | 9.9 | 3.4 | 1.1 | 1.4 | 0.7 |
| | ΔW (%) | 8.0 | 4.9 | 1.0 | -0.3 | -0.5 | -1.1 |
| Permanent deformation during low-temperature compression | | 28 | 30 | 46 | 49 | 58 | 74 |

Materials shown in the above Table 1 are as follows.

H-NBR (1)
manufactured by ZEON CORPORATION, ZETPOL 2020 (AN amount: 36%)
H-NBR (2)
manufactured by ZEON CORPORATION, ZETPOL 3120 (AN amount: 25%)
H-NBR (3)
manufactured by ZEON CORPORATION, ZETPOL 4320 (AN amount: 19%)
H-NBR (4)
manufactured by ZEON CORPORATION, ZETPOL 4300 (AN amount: 19%)
H-NBR (5)
manufactured by ZEON CORPORATION, ZETPOL 4110 (AN amount: 17%)

Antioxidant (1)
manufactured by Sumitomo Chemical Co., Ltd., SUMILIZER MB
Antioxidant (2)
manufactured by OUCHI SHINKO CHEMICAL INDUSTRIAL CO., LTD.,
NOCRAC CD

Carbon black
manufactured by Asahi Carbon Co., Ltd., ASAHI # 35

Plasticizing agent
manufactured by Chisso Corporation, Dioctyl Phthalate

Vulcanizing agent (1) (peroxide)
manufactured by Kayaku Akzo Corporation, PARCADOX 14-40 Vulcanizing agent (2)
manufactured by KAWAGUCHI CHEMICAL CO., LTD., ACTOR Q

Co-cross-linking agent
manufactured by SEIKO CHEMICAL CO., LTD., HI-CROSS M

Each property evaluation of the thus obtained rubber compositions was carried out in accordance with a following standard. The results are also shown in the above Table 1.

### Initial physical properties

Tensile strength at break (TS), elongation at break (EB), hardness (Hs: JIS A) were evaluated in accordance with JIS K 6250.

### Resistance to mineral oil, Heat resistance

The test piece (size: 25 mm x 20 mm, thickness: 2 mm) using the above rubber compositions was dipped in mineral oil (PENTOSIN CHF-11S) under conditions of 100°C x 70 hours, 120°C x 70 hours, and 150°C x 70 hours. The change of tensile strength at break (ΔTS), the change of elongation at break (ΔEB), the change of volume (ΔV) and the change of weight (ΔW) were respectively measured in accordance with JIS K 6258.

### Permanent deformation during low-temperature compression

Elastic retention (%) under condition of -30°C x 22 hours was measured and calculated in accordance with JIS K 6261 by using test piece of each rubber compositions (column: diameter 29.0 mm, height: 12.7 mm).

According to the result of the above Table 1, resistance to mineral oil and heat resistance of H-NBR were improved when an AN amount became higher, by contrast, permanent deformation during low-temperature compression deteriorated.

Next, a diaphragm was produced by using the above rubber compositions, in the following manner.

### Examples 1 to 6, Comparative Examples 1 to 6

First, EVOH (content of ethylene is 32%) and polyamide resin (PA) (nylon 6) were prepared and double-extruded, then resin layer (resin sheet) consisting of a five layered structure comprising PA/EVOH/PA/EVOH/PA and having 0. 2 mm of total thickness was produced. Next, chlorinated polybutadiene rubber adhesive (From Rohm and Haas Company, P6EF) was applied on both sides of the resin layer (the thickness of an adhesion layer after drying is 10 µm) and each rubber compositions shown in Tables 2 and 3 for forming the rubber layer adjacent to the gas chamber and the rubber layer adjacent to the oil chamber were press-formed by a presser and cured to be adhered together. Thus, the desired diaphragm was produced in which, the rubber layer adjacent to the gas chamber was 1.3 mm thick and the rubber layer adjacent to the oil chamber was 1.3 mm thick.

**Table 2**

| | Examples | | | | | |
|---|---|---|---|---|---|---|
| | 1 | 2 | 3 | 4 | 5 | 6 |
| Rubber layer adjacent to gas chamber | Rubber composition 1 | Rubber composition 2 | Rubber composition 1 | Rubber composition 2 | Rubber composition 1 | Rubber composition 2 |
| AN amount (%) | 17 | 19 | 17 | 19 | 17 | 19 |
| Rubber layer adjacent to oil chamber | Rubber composition 3 | Rubber composition 3 | Rubber composition 4 | Rubber composition 4 | Rubber composition 5 | Rubber composition 5 |
| AN amount (%) | 20 | 20 | 26 | 26 | 28 | 28 |
| Amount of deterioration of charged pressure (MPa) | -0.12 | -0.17 | -0.21 | -0.3 | -0.28 | -0.36 |
| | ○ | ○ | ○ | ○ | ○ | ○ |
| Amount of nitrogen gas permeability (cc) | 5.7 | 5.8 | 4.3 | 4.2 | 3.8 | 3.9 |
| | △ | △ | ○ | ○ | ○ | ○ |

**Table 3**

| | Comparative Examples | | | | | |
|---|---|---|---|---|---|---|
| | 1 | 2 | 3 | 4 | 5 | 6 |
| Rubber layer adjacent to gas chamber | Rubber composition 1 3 2 | Rubber composition | Rubber composition | Rubber composition 3 | Rubber composition 3 | Rubber composition 6 |
| AN amount (%) | 17 | 20 | 19 | 20 | 20 | 30 |
| Rubber layer adjacent to oil chamber | Rubber composition 1 2 6 | Rubber composition | Rubber composition | Rubber composition 3 | Rubber composition 5 | Rubber composition 6 |
| AN amount (%) | 17 | 19 | 30 | 20 | 28 | 30 |
| Amount of deterioration of charged pressure (MPa) | -0.06 | -0.22 | -0.42 | -0.38 | -0.47 | -0.72 |
| | ○ | ○ | × | △ | × | × |
| Amount of nitrogen gas permeability (cc) | 6.7 | 6.2 | 3.6 | 5.7 | 3.9 | 3.5 |
| | × | × | ○ | △ | ○ | ○ |

Each property evaluation of the thus obtained products of Examples and Comparative Examples was carried out in accordance with a following standard. The results are also shown in the above Table 2 and Table 3.

### Amount of deterioration of charged pressure (gas-tight property)

The system (accumulator) shown in Fig. 3 was produced using each diaphragm. In Fig.3, 40 is a diaphragm, 43 is a gas chamber and 44 is an oil chamber. And, nitrogen gas was charged into a gas chamber 43 under the condition of 2.5 MPa (20°C) of charged pressure and mineral oil (PENTOSIN CHF-11S) was filled into an oil chamber 44 and allowed to stand under conditions of 140°C and 6.0 MPa of inner pressure in an oil chamber for 168 hours. After that, operating durability test was conducted under -40°C atmosphere and 4.0- 6.0 MPa of operating pressure 10,000 times, then gas charged pressure (20°C) of an accumulator was measured. Each evaluation was shown by ○, which means an amount of a deterioration of charged pressure was not more than -0.36 MPa, △, from more than -0.36 MPa to not more than -0.40 MPa and ×, not less than -0.40 MPa.

### Amount of nitrogen gas permeability (resistance to oil)

The system (accumulator) shown in Fig. 3 was produced using each diaphragms. And, nitrogen gas was charged into a gas chamber 43 under the condition of 2.5 MPa (20°C) of charged pressure and mineral oil (PENTOSIN CHF-11S) was filled into an oil chamber 44, then they were allowed to stand under the conditions of 70°C and 6.0 MPa of inner pressure in the oil chamber for 24 hours. After that, oil was removed from the oil chamber 44 and an amount of nitrogen gas penetration from the gas chamber 43 was measured by a measuring cylinder. Each evaluation was shown by ○, which means an amount of nitrogen gas penetration was not more than 5 cc, △, from more than 5 cc to not more than 6 cc and ×, more than 6 cc.

From the above results, an AN amount of H-NBR used for a rubber layer adapted to be adjacent to a gas chamber was less than 20% in all products of Examples, permanent deformation during low-temperature compression and a gas-tight property were improved and an amount of a deterioration of charged pressure may be suppressed. An AN amount of H-NBR used for a rubber layer adapted to be adjacent to an oil chamber was within a range from 20 to 28% in all products of Examples, then resistance to oil (swelling property and oil permeability) was improved and an amount of nitrogen gas penetration may be suppressed.

By contrast, an AN amount of H-NBR used for a resin layer adapted to be adjacent to a gas chamber in the product of Comparative Example 1 was low, thus a gas-tight property was good but an AN amount of H-NBR used for a rubber layer adapted to be adjacent to an oil chamber was too small, then oil resistance on a side adjacent to an oil chamber and gas peremeability resistance deteriorated. In the product of Comparative Example 2, an AN amount of H-NBR used for a rubber layer adapted to be adjacent to an oil chamber was low thus oil resistance on a side adjacent to an oil chamber and gas peremeability resistance deteriorated. In products of Comparative Examples 3 and 6, an AN amount used for a rubber layer adapted to be adjacent to an oil chamber was so high that a gas-tight property deteriorated. In the product of Comparative Example 4, both a gas-tight property of a rubber layer adapted to be adjacent to a gas chamber and resistance to oil of a rubber layer adapted to be adjacent to an oil chamber deteriorated, sufficient function of product could not be gained. In the product of Comparative Example 5, an AN amount of a rubber layer adapted to be adjacent to a gas chamber was high, thus a gas-tight property deteriorated.

First, prior to preparation of the Examples and Comparative Examples, rubber compositions were prepared.

### Preparation of rubber compositions 7

The components shown in the following Table 4 were mixed together in ratios shown in the same Table and then kneaded using a roller to prepare rubber compositions.

**Table 4**

| | | Rubber composition 7 |
|---|---|---|
| H-NBR | Amount (parts by weight) | 100 |
| | AN amount (% by weight) | 25 |
| FEF(Fast Extruding Furnace) carbon black | | 50 |
| Antioxidant (1) | | 1 |
| Antioxidant (2) | | 1.5 |
| Vulcanizing agent | | 8 |
| Plasticizing agent | | 5 |
| Zinc oxide | | 5 |
| Stearic acid | | 0.5 |

Materials shown in the above Table 4 are as follows.

H-NBR
manufactured by ZEON CORPORATION, ZETPOL 3110 (AN amount: 25% by weight)

Carbon black
manufactured by Mitsubishi Chemical Corporation, DIABLACK E

Antioxidant (1) manufactured by Sumitomo Chemical Co., Ltd., SUMILIZER MB Antioxidant (2)
manufactured by OUCHI SHINKO CHEMICAL INDUSTRIAL CO., LTD.,
NOCRAC CD

Vulcanizing agent (peroxide)
manufactured by Kayaku Akzo Corporation, PARCADOX 14-40

Plasticizing agent
manufactured by Chisso Corporation, Dioctyl Phthalate

Next, a diaphragm was produced by using the above rubber compositions.

### Example 7

First, EVOH (32% of ethylene content) and a polyamide resin (PA) (nylon 6) were prepared and double-extruded so as to be formed into a resin layer (resin sheet) consisting of a five layered structure comprising PA/EVOH/PA/EVOH/PA and having 0.2 mm of total thickness. Next, the surface was cleaned off by isopropyl alcohol (IPA), and was treated with chlorinated polybutadiene rubber adhesive (From Rohm and Haas Company, P6EF) by dipping and dried by air, then an adhesion layer (10 µm of thickness) was formed on both sides of the above resin layer. Next, each rubber composition shown in Table 5 for forming the rubber layer adjacent to a gas chamber and the rubber layer adjacent to an oil chamber was cohered by rolls and cured to be adhered to the surface of the above adhesion layer for 170°C x 20 minutes. Thus, the desired rubber-resin layered product sheet (diaphragm) was produced in which, the rubber layer adjacent to the gas chamber was 1.3 mm thick and the rubber layer adjacent to the oil chamber was 1.3 mm thick.

### Comparative Example 7

As substitute for the above chlorinated polybutadiene rubber adhesive, a chlorinated polyolefin adhesive (manufactured by LORD Far East Corporation, C6108) was used. A rubber-resin layered product sheet (diaphragm) was produced in the same manner as Example 7 except for that.

**Table 5**

| | | Example 7 | Comparative Example 7 |
|---|---|---|---|
| Rubber layer adjacent to gas chamber | | Rubber composition 7 | Rubber composition 7 |
| Rubber layer adjacent to oil chamber | | Rubber composition 7 | Rubber composition 7 |
| Adhesion layer | | *1 | *2 |
| Blank | TS (MPa) | 10.2 | 8.2 |
| | EB (%) | 140 | 100 |
| | Separation mode | OK | Partially NG |
| | Adhesive rupture force (N/inch) | 95 | 178 |
| | State of resin layer | ⊚ | - |
| 100°C x 70 hours | TS (MPa) | 10.1 | 7.5 |
| | EB (%) | 110 | 80 |
| | Separation mode | OK | OK |
| | Adhesive rupture force (N/inch) | 105 | 152 |
| | State of resin layer | ⊚ | × |
| 120°C x 70 hours | TS (MPa) | 9.2 | 7.1 |
| | EB (%) | 100 | 75 |
| | Separation mode | OK | OK |
| | Adhesive rupture force (N/inch) | 90 | 152 |
| | State of resin layer | ○ | × |
| 150°C x 70 hours | TS (MPa) | 9.6 | 6.4 |
| | EB (%) | 85 | 50 |
| | Separation mode | OK | Entirely NG |
| | Adhesive rupture force (N/inch) | 70 | 110 |
| | State of resin layer | ○ | × |

| | | | |
|---|---|---|---|
| *1: Chlorinated polybutadiene rubber adhesive (From Rohm and Haas Company, P6EF) *2: Chlorinated polyolefin adhesive (manufactured by LORD Far East Corporation, C6108) | | | |

Each property evaluation of the thus obtained products of Examples and Comparative Examples was carried out in accordance with a following standard. The results were also shown in the above Table 5.

### Property evaluation

Each rubber-resin layered product sheet was dipped into mineral oil (PENTOSIN CHF-11S) for 70 hours under each condition of 100°C, 120°C and 150°C, then taken out, pierced by JIS 3 size of dumbbell and tensile strength at break (TS) and elongation at break (EB) were evaluated in accordance with JIS K 6250. The tensile strength at break (TS) and the elongation at break (EB) were evaluated in the same manner before oil dipping (blank).

### Bond separation Test

A rubber-resin layered product sheet was produced in the same manner as Examples and Comparative Examples. In this case, about one third of the sheet was masked by a film then the chuck part for 180° bond separation test was produced. Then, each rubber-resin layered product sheet was dipped into mineral oil (PENTOSIN CHF-11S) for 70 hours under each condition of 100°C, 120°C and 150°C, then taken out, and a one-inch oblong test piece was produced then a 180° bond separation test was conducted. And also, a 180° bond separation test was conducted in the same manner before oil dipping (blank).

### Condition of resin layer

The appearance of the resin layer after the above bond separation test was observed visually. Each evaluation was shown by ×, which means a lot of crack formations were observed in the resin layer, ○, which means few crack formations were observed in the resin layer and ⊚, which means no crack formation was observed in the resin layer.

According to the result of the above Table 5, the product of Comparative Example 7 using chlorinated polyolefins adhesive had bigger property deterioration as a result of heat load than the product of Example 7 using a chlorinated polybutadiene rubber adhesive. When the appearance of the resin layer after the bond separation test was observed, cure phenomenon on the adhesion layer in the product of Comparative Example 7 was strong and the product became very fragile, thus a lot of crack formations were occurred in the resin layer. By contrast, the adhesion layer in the product of Example 7 was flexible thus it was possible to suppress crack formation in the resin layer.

The diaphragm and accumulator of the present invention can be used for hydraulic systems (hydraulic suspensions, hydraulic automatic clutches, power steering and the like) and the like of automobile vehicles, industrial vehicles and the like.

## Claims

1. A diaphragm comprising:
a resin layer for gas shielding;
a rubber layer adapted to be adjacent to a gas chamber, and
a rubber layer adapted to be adjacent to an oil chamber, the rubber layers being formed on opposite sides of the resin layer; wherein
the rubber layer adapted to be adjacent to the gas chamber is formed of a rubber composition containing a component (A) mentioned below and the rubber layer adapted to be adjacent to the oil chamber is formed of a rubber composition containing a component (B) mentioned below:
(A) a hydrogenated acrylonitrile butadiene rubber in which an amount of a bound acrylonitrile is less than 20%, and
(B) a hydrogenated acrylonitrile butadiene rubber in which an amount of a bound acrylonitrile is set within a range from 20 to 28%.

2. A diaphragm as claimed in claim 1, wherein the amount of the bound acrylonitrile in the hydrogenated acrylonitrile butadiene rubber as the component (A) is set within a range from 17 to 19%.

3. An accumulator comprising:
a shell; and
a diaphragm which separates an internal space of the shell into a gas chamber and an oil chamber; wherein
the diaphragm consists of the diaphragm as claimed in claim 1 or 2.

4. A diaphragm comprising:
a resin layer for gas shielding;
a rubber layer adapted to be adjacent to a gas chamber, and
a rubber layer adapted to be adjacent to an oil chamber, the rubber layers being formed on opposite sides of the resin layer; wherein
the resin layer and the rubber layer adapted to be adjacent to a gas chamber, the resin layer and the rubber layer adapted to be adjacent to an oil chamber are respectively bonded using a chlorinated polybutadiene rubber adhesive.

5. An accumulator comprising:
a shell; and
a diaphragm which separates an internal space of the shell into a gas chamber and an oil chamber; wherein
the diaphragm consists of the diaphragm as claimed in claim 4.
